(19) Europäisches Patentamt
European Patent Office
Office européen des brevets

(11) Publication number: **0 071 586**
**A1**

(12) ## EUROPEAN PATENT APPLICATION

(21) Application number: 82830213.3

(22) Date of filing: 26.07.82

(51) Int. Cl.³: **F 16 L 9/00**
**F 16 L 37/00**

(30) Priority: 29.07.81 IT 4043881

(43) Date of publication of application:
09.02.83 Bulletin 83/6

(84) Designated Contracting States:
AT BE CH DE FR GB LI NL SE

(71) Applicant: Soc. C.O.I. SUD di GRIMALDI Carlo
Via Appia, 59
I-83042 Atripalda (AV)(IT)

(72) Inventor: Grimaldi, Carlo
Via Appia, 59
I-83042 Atripalda (AV)(IT)

(74) Representative: Mascioli, Alessandro, Prof.Dr.
c/o A.N.D.I. Associazione Nazionale degli Inventori Via
Lima, 35
I-00198 Roma(IT)

(54) Assembled tube.

(57) Cylindrical or prismatic assembled tube consisting of two or more half-cylinder, right angle or flat elements which are shipped and stored in stacks and then prepared for use by inserting one into another in correspondence with the mouldings along the generatrices.

FIG.6

EP 0 071 586 A1

Assembled tube

Coi Sud di Grimaldi Carlo, Atripalda (AV), Via Appia 59

The invention involves an assembled tube which can be put together with two or more elements moulded along their generatrices so that the component elements may be inserted one into another.

It is well known that certain devices, particularly suction devices, require very thin-walled tubes with large diameters which are thus very bulky, especially for shipping and storage.

The aim of this invention is the realization of a tube divided in two or more sections, so that they may be piled one on top of the other to allow shipping in very small spaces.

However, the tube must be assembled for use after shipping in the most rapid, convenient and simple way possible, even by non-specialized workers.

This aim is achieved with an assembled tube made up of two or more elements which can be shipped and stored in stacks and then assembled in place by inserting one in another, using a spring-loaded bend and moulding of the generatrices to effect the necessary seal between the component elements.

- 3 -

Some preferred, but exemplificative only, embodiments
are shown in the attached drawings in figures 1-8, as
follows:

- fig. 1 shows an axonometric view of several overlapping half-tubes, of minimum bulk;

- fig. 2 shows an axonometric view of the detail relative to  insertion of two shaped generatrices from
two different half-tubes;

- fig. 3 shows a cross section of the moulding generatrices after insertion;

- fig..4 shows an axonometric view of a prismatic rectangular tube after assembling;

- fig. 5 shows a cross section of the groove area,
with a different profile from that shown in fig. 3;

- fig. 6 shows two circular half-tubes being inserted
one into another;

- fig. 7 shows flat and angular component elements for
a prismatic variant with several elements;

- fig. 8 shows an axonometric view of a prismatic tube
assembled with the elements shown in fig. 7.


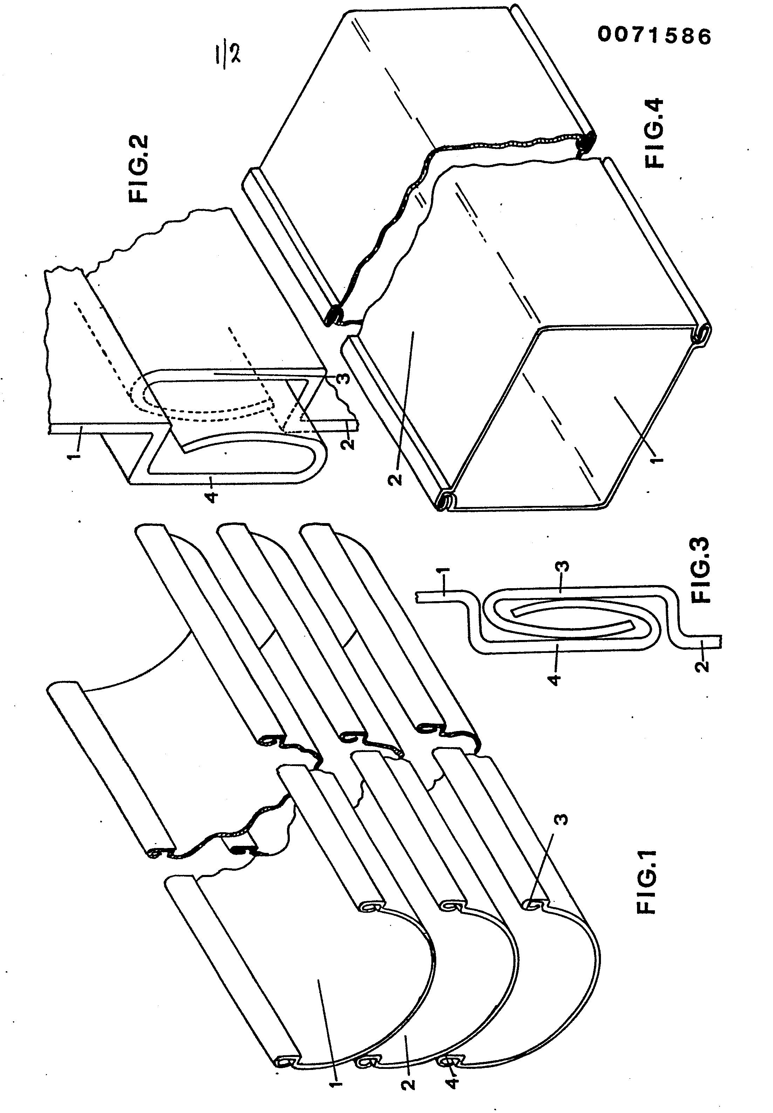

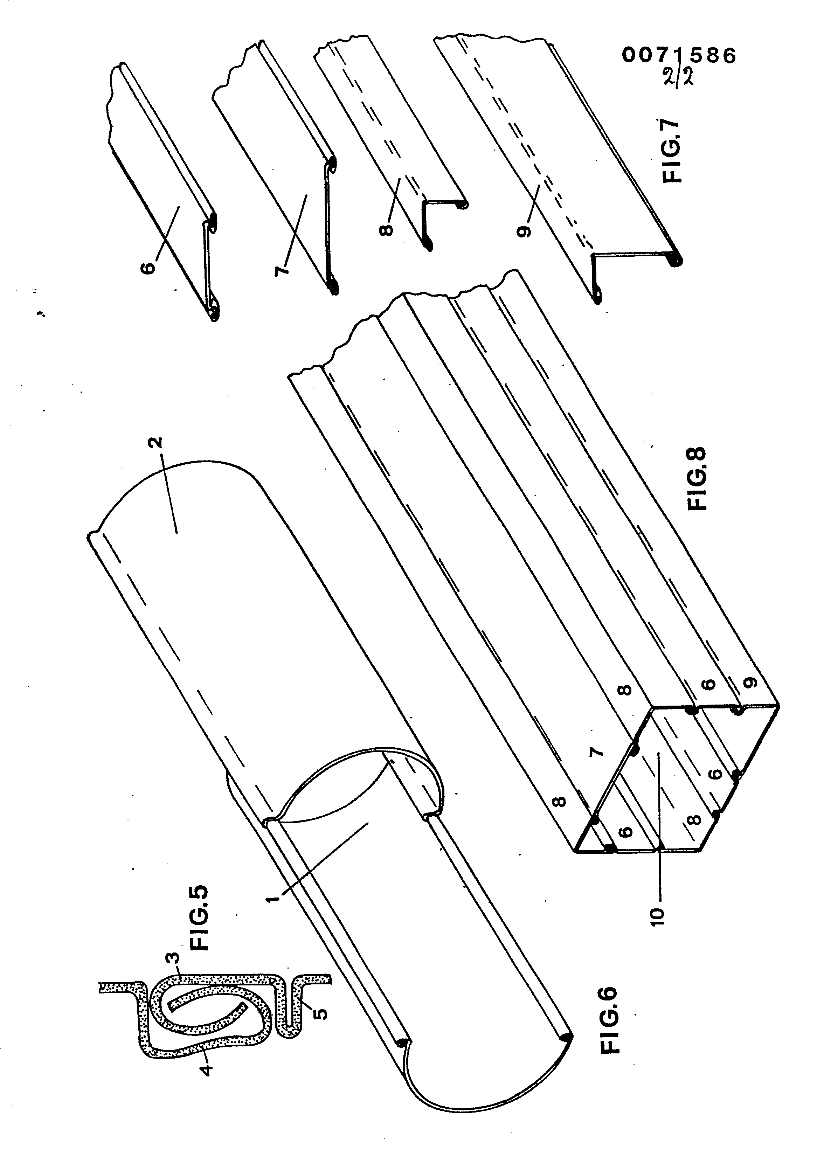

Figure 1 shows two cylindrical or angular half-tubes
1 and 2 being combined by bending ends 3 and 4 along
the generatrices so that they assume a shape which allows one to be inserted in the other, with a profile
with parallel edges as in fig. 3, trapezoidal edges
as in fig. 5, or any other suitable shape.


The profile shown in fig. 5 may have bent loop 5 corresponding with the generatrices to allow greater elasticity. In any case, however, the section consists of an edge of the tube folded in a spiral and shaped so as to allow the necessary elasticity for the pieces to be assembled.

In the variants in fig. 7 and fig. 8, flat elements 6 and 7 and right angle elements 8 and 9 allow prismatic tubes 10 to be formed in various sizes, as a function of the number of elements used.

It is clear that the mouldings on the ends 3 and 4 along the generatrices of all the elements allow the ends of the spirals of the tube edges to come in contact with the spiral opposite to ensure a natural, mild pressure when the pieces are assembled.

As a variation, moulidngs 3 and 4 may be sprinkled with a thin layer of glue to completely lock the tube in place.

The invention offers the advantages cited above; large quantities of disassembled tubes may be shipped with minimum bulk, assembly and disassembly are simple, rapid and non-specialized. It should be noted that the tubes according to this invention are assembled with no welding.

Bends 3 and 4 along the generatrices are like ribbing to ensure the tube's rigidity and so allow very thin-walled tubes to be prepared.

The elasticity arising from spring-loaded bent loop 5 allows the walls to bend somewhat on contact, and so allows another element to be inserted and added to the tube.

The invention is of particularly interesting application in the area of metal tubes, where traditional manufacture involves preparation of complete tubes with normal diameters by means of rolling and welding or beating. For tubes in other materials, the more complicated manufacture is almost completely compensated for by the advantages noted.

Of course, the invention may include formal and sturctural variations in both the shape of the sprial mouldings 3 and 4 and their placement along the tube, in particular to allow placement of one half-tube in another. In prismatic quadrangular section tubes 10, they may be conveniently placed on the edges.

While the principle of the invention remains the same, the forms of realization and the particulars of construction may be widely varied from that described and illustrated here, without however going beyond the bounds of the invention.

Claims:

1.   Assembled tube made up of two or more elements which can be shipped and stored in stacks and then assembled in place by inserting one in another, using a spring-loaded bend and moulding of the generatrices to effect the necessary seal between the component elements.

2.   Assembled tube as claimed in claim 1 wherein two cylindrical or angular half-tubes 1 and 2 are combined by bending ends 3 and 4 along the generatrices so that they assume a shape which allows one to be inserted in the other, with a profile with parallel or trapezoidal edges, or any other suitable shape.

3.   Assembled tube as claimed in the preceding claims wherein bent loop 5 corresponding with the generatrices allows greater elasticity.

4.   Assembled tube as claimed in claim 1 wherein flat elements 6 and 7 and right angle elements 8 and 9 allow prismatic tubes 10 to be formed in various sizes, as a function of the number of elements used.

5.   Assembled tube as claimed in the preceding claims wherein mouldings on the ends 3 and 4 along the generatrices of all the elements allow the ends of the spirals of the tube edges to come in contact with the spiral opposite to ensure a natural, mild pressure when the pieces are assembled.

6.  Assembled tube as claimed in the preceding claims wherein mouldings 3 and 4 are sprinkled with a thin layer of glue to completely lock the tube in position.

FIG.1

FIG.2

FIG.3

FIG.4

1/2

0071586

FIG.7

FIG.8

FIG.5

FIG.6

| Category | Citation of document with indication, where appropriate, of relevant passages | Relevant to claim |
|---|---|---|
| X | <u>AT - B - 292 400</u> (TROGES)  <br> * Totality * <br> -- | 1-3,6 |
| A | <u>DE - B - 2 131 429</u> (PRIX-BAUELE-MENTE) <br> * Fig. 1 * <br> -- | 1 |
| A | <u>US - A - 4 105 051</u> (VISENTIN) <br> * Fig. 1-4 * <br> ---- | 1 |

## DOCUMENTS CONSIDERED TO BE RELEVANT

**CLASSIFICATION OF THE APPLICATION (Int. Cl. 3)**

F 16 L 9/00
F 16 L 37/00

**TECHNICAL FIELDS SEARCHED (Int.Cl. 3)**

F 16 L 9/00
F 16 L 25/00
F 16 L 37/00
F 16 B 7/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| VIENNA | 20-10-1982 | SCHUGANICH |

EPO Form 1503.1 06.78